# EUROPÄISCHE PATENTSCHRIFT

(11) **EP 2 843 238 B1**
(45) Veröffentlichungstag und Bekanntmachung des Hinweises auf die Patenterteilung: **01.06.2022**
(21) Anmeldenummer: 14181310.5
(22) Anmeldetag: 18.08.2014
(51) Int. Cl.: F04D 25/02

(54) **Vakuumpumpe in der unterschiedliche Module entweder mit unterschiedlichen Drehzahlen betrieben werden können oder von unterschiedlichen Gasströmen durchströmt werden können**
Vacuum pump in which different modules either can be driven with different speeds or can be traversed by different gas flows
Pompe à vide dans laquelle différents modules peuvent soit être opérés à des vitesses différentes, soit être traversés par des flux de gaz différents

(30) Priorität: 21.08.2013 DE 102013216593
(43) Veröffentlichungstag der Anmeldung: 04.03.2015
(73) Patentinhaber: PFEIFFER VACUUM GMBH, 35614 Asslar (DE)
(72) Erfinder: Shirinov, Aleksandr, 35576 Wetzlar (DE); Oberbeck, Sebastian, 35781 Weilburg (DE); Latta, Sebastian, 61209 Echzell (DE); Gogol, Torsten, 35630 Ehringshausen (DE)
(74) Vertreter: Manitz Finsterwald Patent- und Rechtsanwaltspartnerschaft mbB

(56) Entgegenhaltungen:
- EP-A1- 1 213 482
- EP-A2- 0 283 287
- WO-A1-03/031823
- DE-A1- 2 354 046
- JP-A- 2006 342 791
- JP-B2- 3 558 733
- US-A1- 2006 093 473

## Beschreibung

Die Erfindung betrifft eine Vakuumpumpe und ein Verfahren zum Betreiben einer Vakuumpumpe.

Vakuumpumpen werden in unterschiedlichen technischen Bereichen wie z.B. bei der Halbleiterherstellung eingesetzt, um ein für den jeweiligen Prozess notwendiges Vakuum zu schaffen. Besonders vorteilhaft einsetzbar sind Vakuumpumpen, die einerseits einen niedrigen Endvakuumdruck erreichen und andererseits an ihrem Auslass direkt gegen Atmosphärendruck ausstoßen können, so dass keine Vorvakuumpumpe zur Erzeugung eines Vorvakuums mit einem gegenüber dem Atmosphärendruck abgesenkten Druck erforderlich ist.

Es sind Vakuumpumpen bekannt, die einen Pumpeneinlass sowie wenigstens ein Hochvakuumpumpmodul und wenigstens ein Grobvakuumpumpmodul aufweisen, die in einem gemeinsamen Gehäuse der Vakuumpumpe angeordnet sind und zur Bereitstellung einer Pumpwirkung für ein an dem Pumpeneinlass anstehendes Gas miteinander wirkverbunden sind. Die zwei Pumpmodule können dabei gasleitend in Serie geschaltet sein, wobei das Hochvakuumpumpmodul das an dem Pumpeneinlass anstehende Gas von dem an dem Pumpeneinlass vorherrschenden Druck von z.B. 10⁻⁷ hPa auf einen höheren Druck bis z.B. 1 hPa verdichtet und das Grobvakuumpumpmodul das Gas von diesem Druck auf den Ausstoßdruck der Vakuumpumpe, d.h. bevorzugt auf Atmosphärendruck, verdichtet.

Der Rotor des Hochvakuumpumpmoduls und der Rotor des Grobvakuumpumpmoduls sind bei den bekannten Vakuumpumpen auf einer gemeinsamen Rotorwelle angeordnet und mit derselben Drehzahl drehend antreibbar. Es sind auch Vakuumpumpen bekannt, die mehrere koaxiale Rotorwellen umfassen, die derart miteinander gekoppelt sind, dass sie mit derselben Drehzahl drehend antreibbar sind.

Nachteilig bei bekannten Vakuumpumpen der beschriebenen Art ist, dass die Saugleistung und die Pumpeffizienz der Vakuumpumpe beschränkt ist und insbesondere bei hohen Ansaugdrücken, d.h. hohen Drücken des an dem Pumpeneinlass anstehenden Gases, stark abnimmt. Insbesondere steigt der Energieverbrauch des Hochvakuumpumpmoduls mit zunehmenden Ansaugdrücken erheblich, ohne dass die von dem Hochvakuumpumpmodul bereitgestellte Saugleistung in entsprechender Weise zunimmt so dass die Pumpeffizienz beeinträchtigt ist. Die Dokumente EP 0 283 287 A2, JP 3 558733 B2 und JP 2006 342791 A offenbaren jeweils eine Vakuumpumpe mit zwei Rotoren, wobei ein Rotor den anderen Rotor mittels einer magnetischen Kupplung antreibt.

Aufgabe der Erfindung ist es daher, eine Vakuumpumpe zu schaffen, die insbesondere auch bei hohen Ansaugdrücken eine hohe Pumpeffizienz erreicht und die gleichzeitig kompakt ausgebildet und kostengünstig herstellbar ist. Aufgabe der Erfindung ist ferner die Angabe eines Verfahrens zum Betreiben einer Vakuumpumpe, mit dem auch bei hohen Ansaugdrücken eine hohe Pumpeffizienz erreicht wird.

Die Aufgabe wird durch eine Vakuumpumpe mit den Merkmalen des Anspruchs 1 gelöst. Vorteilhafte Ausführungsformen der Erfindung sind in den Unteransprüchen und in der Beschreibung beschrieben.

Die Vakuumpumpe, welche insbesondere eine gegen Atmosphärendruck ausstoßende Vakuumpumpe ist, umfasst einen Pumpeneinlass sowie wenigstens ein Hochvakuumpumpmodul und wenigstens ein Grobvakuumpumpmodul, die in einem gemeinsamen Gehäuse der Vakuumpumpe angeordnet und zur Bereitstellung einer Pumpwirkung für ein an dem Pumpeneinlass anstehendes Gas miteinander wirkverbunden sind. Die Wirkverbindung ist veränderlich und/oder verstellbar, um das Verhältnis der von dem Hochvakuumpumpmodul bereitgestellten Saugleistung zu der von dem Grobvakuumpumpmodul bereitgestellten Saugleistung zu verändern.

Die Vakuumpumpe sieht also eine veränderliche und/oder verstellbare Wirkverbindung zwischen den beiden Pumpmodulen vor, wodurch ein veränderliches bzw. verstellbares Verhältnis der von den beiden Pumpmodulen bereitgestellten Saugleistungen erreicht wird. Dadurch wird es z.B. ermöglicht, bei hohen Ansaugdrücken das Verhältnis der von dem Hochvakuumpumpmodul bereitgestellten Saugleistung zu der von dem Grobvakuumpumpmodul bereitgestellten Saugleistung durch Verändern und/oder Verstellen der Wirkverbindung, insbesondere selbsttätig bzw. automatisch, zu reduzieren. Dadurch wird ein übermäßiger Anstieg der von dem Hochvakuumpumpmodul aufgenommenen Antriebsleistung verhindert und die Pumpeffizienz der Vakuumpumpe erhöht.

Die Veränderung bzw. Verstellung der Wirkverbindung kann, wie nachfolgend im Einzelnen erläutert, auf unterschiedliche Weise bewerkstelligt werden, erfindungsgemäß durch voneinander verschiedene Drehzahlen der Pumpmodule, nicht erfindungsgemäß durcheine Veränderung der Verteilung der Gaslast auf die Pumpmodule, durch Verändern einer Drehzahl eines rotierbaren Stators eines Pumpmoduls oder durch eine beliebige Kombination der genannten Maßnahmen. In jedem Fall kann die Wirkverbindung verschiedene Zustände annehmen, in denen verschiedene Verhältnisse der von den Pumpmodulen bereitgestellten Saugleistungen vorliegen.

Da die Pumpmodule in einem gemeinsamen Gehäuse angeordnet sind, ist die Vakuumpumpe kostengünstig herstellbar und kompakt aufgebaut. Strömungsverluste zwischen den Pumpmodulen werden gering gehalten und es werden geringe Leitungswiderstände innerhalb der Vakuumpumpe realisiert, welche zu einer hohen Pumpeffizienz und einem geringen Leistungsbedarf der Vakuumpumpe führen.

Vorzugsweise ist die Wirkverbindung, insbesondere abhängig von einer oder mehreren Betriebsgrößen der Vakuumpumpe, selbsttätig veränderlich und/oder automatisch verstellbar, so dass automatisch eine höhere Pumpeffizienz erreicht wird. Unter einer selbsttätigen Veränderlichkeit wird insbesondere eine passive selbsttätige Veränderlichkeit verstanden und unter einer automatischen Verstellbarkeit wird insbesondere eine aktive automatische Verstellbarkeit verstanden.

Gemäß einer Ausführungsform ist die Wirkverbindung derart selbsttätig veränderlich und/oder automatisch verstellbar, dass eine durch eine Erhöhung des Drucks des an dem Pumpeneinlass anstehenden Gases hervorgerufene Erhöhung der von dem Hochvakuumpumpmodul im Betrieb der Vakuumpumpe aufgenommenen Antriebsleistung vermieden oder zumindest reduziert wird. Dadurch wird automatisch vermieden, dass eine Erhöhung des Ansaugdrucks zu einer übermäßigen Erhöhung der von dem Hochvakuumpumpmodul aufgenommenen Antriebsleistung gegenüber dem Betrieb bei einem geringeren Ansaugdruck führt, wodurch die Pumpeffizienz erhöht wird.

Beispielsweise kann die Wirkverbindung derart selbsttätig veränderlich und/oder automatisch verstellbar sein, dass die von dem Hochvakuumpumpmodul im Betrieb der Vakuumpumpe aufgenommene Antriebsleistung beschränkt ist. Die selbsttätige Veränderung bzw. automatische Verstellung der Wirkverbindung kann beispielsweise erfolgen, wenn ein bestimmter Ansaugdruck erreicht wird und/oder wenn eine bestimmte, von dem Hochvakuumpumpmodul aufgenommene Antriebsleistung erreicht wird.

Die von dem Hochvakuumpumpmodul aufgenommene Antriebsleistung kann z.B. auf weniger als 20 %, weniger als 15 % oder auf höchstens 10 % der Summe der von beiden Pumpmodulen aufgenommenen Antriebsleistungen beschränkt sein. Die von dem Hochvakuumpumpmodul aufgenommene Antriebsleistung kann beispielsweise auf einen absoluten Wert von höchstens 200 W, höchstens 150 W oder höchstens 100 W beschränkt sein. Dadurch wird eine übermäßige Leistungsaufnahme des Hochvakuumpumpmoduls zuverlässig vermieden und eine hohe Pumpeffizienz sichergestellt.

Unter der von einem Pumpmodul aufgenommenen Antriebsleistung wird zum einen die gesamte von dem Pumpmodul aufgenommene Antriebsleistung verstanden, welche bei der nachstehend beschriebenen Ausführungsform mit einem drehbaren Stator die Summe der von dem Rotor und dem Stator des Pumpmoduls aufgenommenen Antriebsleistung ist, oder gleichermaßen die allein von dem Rotor des Pumpmoduls aufgenommene Antriebsleistung.

Die Wirkverbindung ist vorzugsweise zumindest innerhalb eines Betriebsbereichs der Vakuumpumpe veränderlich und/oder verstellbar, in dem der Ansaugdruck zwischen dem mit der Vakuumpumpe erreichbaren Enddruck und dem Atmosphärendruck liegt und z.B. zwischen 0,1 hPa und 10 hPa und insbesondere im Bereich von 1 hPa liegt, und in dem die Drehzahl der Vakuumpumpe innerhalb eines Betriebsdrehzahlbereichs der Vakuumpumpe und insbesondere im Bereich der Nenndrehzahl der Vakuumpumpe liegt.

Erfindungsgemäß sind ein Rotor des Hochvakuumpumpmoduls einerseits und ein Rotor des Grobvakuumpumpmoduls andererseits mit unterschiedlichen Drehzahlen drehend antreibbar. Das Verhältnis der Drehzahl des Rotors des Hochvakuumpumpmoduls zu der Drehzahl des Rotors des Grobvakuumpumpmoduls ist dabei veränderlich und/oder verstellbar, um das Verhältnis der von dem Hochvakuumpumpmodul bereitgestellten Saugleistung zu der von dem Grobvakuumpumpmodul bereitgestellten Saugleistung zu verändern. Dies schafft die besonders wirksame Möglichkeit, das Verhältnis der von beiden Pumpmodulen bereitgestellten Saugleistungen durch Verändern bzw. Verstellen des Drehzahlverhältnisses beider Pumpmodule anzupassen. Beispielsweise können die Drehzahlen so selbsttätig veränderlich oder automatisch verstellbar sein, dass bei hohen Ansaugdrücken eine im Verhältnis zu der Drehzahl des Rotors des Grobvakuumpumpmoduls geringere Drehzahl des Rotors des Hochvakuumpumpmoduls vorhanden ist als bei höheren Ansaugdrücken.

Beispielsweise kann bei hohen Ansaugdrücken die Drehzahl des Rotors des Hochvakuumpumpmoduls geringer sein als die Drehzahl des Grobvakuumpumpmoduls. Dadurch wird ein übermäßiger Anstieg der von dem Hochvakuumpumpmodul aufgenommenen Antriebsleistung vermieden, welcher bei einer drehfesten Kopplung und identischen Drehzahlen beider Rotoren auftreten würde.

Gemäß einer vorteilhaften, jedoch nicht erfindungsgemäßen Ausführungsform umfassen das Hochvakuumpumpmodul und das Grobvakuumpumpmodul jeweils eine von zwei voneinander getrennten Rotorwellen. Die Rotorwellen können jeweils durch einen von zwei voneinander getrennten Antrieben drehend antreibbar sein. Dadurch wird es ermöglicht, die Drehzahlen der Rotoren der beiden Pumpmodule unabhängig voneinander einzustellen, wodurch eine besonders wirksame Anpassung der von beiden Pumpmodulen jeweils bereitgestellten Saugleistungen möglich ist. Jeder Antrieb kann einen Motorstator umfassen, wobei die beiden Motorstatoren voneinander getrennt ausgebildet oder einteilig miteinander ausgebildet und insbesondere gemeinsam vergossen sein können.

Die beiden Rotorwellen können auch über eine Über- oder Untersetzung mit einem gemeinsamen Antrieb zum Antreiben beider Rotorwellen verbunden sein, wobei die Über- oder Untersetzung veränderlich und/oder verstellbar ist, um das Drehzahlverhältnis zwischen den Rotoren der Pumpmodule zu verändern. Vorzugsweise sind die beiden Rotorwellen getrennt voneinander gelagert.

Wenn jede Rotorwelle einen eigenen Antrieb aufweist, können die beiden Antriebe von einer gemeinsamen Steuereinheit mit elektrischer Leistung versorgt werden.

Gemäß einer vorteilhaften Ausführungsform sind die Rotorwelle des Hochvakuumpumpmoduls und die Rotorwelle des Grobvakuumpumpmoduls zum Bereitstellen einer in derselben Strömungsrichtung orientierten Pumpwirkung in zueinander entgegengesetzten Drehrichtungen drehend antreibbar. Dadurch wird der Nachteil vermieden, dass im Falle einer Bewegung der gesamten Vakuumpumpe die Spaltweiten zwischen den Rotor- und Statorelementen der Vakuumpumpe infolge der auftretenden Corioliskräfte auf einer Seite erheblich verringert und auf der andere Seite erheblich vergrößert werden und die vakuumtechnischen Daten dadurch verschlechtert werden. Die zueinander entgegengesetzten Rotationsbewegungen beider Rotoren kompensieren sich stattdessen zumindest teilweise, so dass gefahrlos geringere Spaltweiten der Vakuumpumpe realisierbar sind und die vakuumtechnischen Daten der Vakuumpumpe verbessert werden.

Erfindungsgemäß weisen das Hochvakuumpumpmodul und das Grobvakuumpumpmodul eine gemeinsame Rotorwelle auf, wobei der Rotor des Hochvakuumpumpmoduls oder der Rotor des Grobvakuumpumpmoduls relativ zu der Rotorwelle drehbar mit der Rotorwelle gekoppelt ist und vorzugsweise von der Rotorwelle getragen ist. Der Rotor ist bevorzugt drehbar auf der Rotorwelle gelagert. Die Drehachse der gemeinsamen Rotorwelle und die Drehachse, um die der mit der gemeinsamen Drehachse gekoppelte Rotor gegenüber der gemeinsamen Rotorwelle drehbar ist, fallen bevorzugt zusammen.

Der mit der gemeinsamen Rotorwelle drehbar gekoppelte Rotor ist erfindungsgemäß von der gemeinsamen Rotorwelle sowie, wie nachstehend erläutert, von einem zusätzlichen Sekundärantrieb, drehend antreibbar. Die unterschiedlichen Drehzahlen werden dabei durch eine Rotation des einen Rotors relativ zu der gemeinsamen Rotorwelle gewährleistet.

Bei dem mit der gemeinsamen Rotorwelle gekoppelten Rotor handelt es sich vorzugsweise um den Rotor des Hochvakuumpumpmoduls. Die gemeinsame Rotorwelle kann sich in Rotationsachsenrichtung ganz oder teilweise durch den drehbar mit der Rotorwelle gekoppelten Rotor hindurch erstrecken.

Bevorzugt ist die auf die gemeinsame Rotorwelle bezogene Drehzahl des drehbar mit der gemeinsamen Rotorwelle gekoppelten Rotors veränderlich und/oder verstellbar, um das Verhältnis der von dem Hochvakuumpumpmodul bereitgestellten Saugleistung zu der von dem Grobvakuumpumpmodul bereitgestellten Saugleistung zu verändern.

Gemäß einer nicht erfindungsgemäßen Ausführungsform ist der Rotor des Hochvakuumpumpmoduls oder der Rotor des Grobvakuumpumpmoduls über eine Kupplung mit der gemeinsamen Rotorwelle gekoppelt. Die Kupplung kann dazu ausgebildet sein, ein Drehmoment von der gemeinsamen Rotorwelle auf den mit der gemeinsamen Rotorwelle drehbar gekoppelten Rotor zu übertragen.

Das Verhältnis der Antriebsdrehzahl zu der Abtriebsdrehzahl der Kupplung ist vorzugsweise veränderlich und/oder verstellbar, um das Verhältnis der von dem Hochvakuumpumpmodul bereitgestellten Saugleistung zu der von dem Grobvakuumpumpmodul bereitgestellten Saugleistung zu verändern.

Beispielsweise kann das Verhältnis der Antriebsdrehzahl zu der Abtriebsdrehzahl abhängig von der Drehmomentbelastung der Kupplung selbsttätig veränderlich oder automatisch verstellbar sein, vorzugsweise derart, dass das über die Kupplung übertragbare Drehmoment beschränkt ist. Durch die Beschränkung des Drehmoments kann die bei der Betriebsdrehzahl der gemeinsamen Rotorwelle an das Hochvakuumpumpmodul übertragbare Antriebsleistung beschränkt sein, insbesondere derart, dass ein übermäßiger Anstieg der von dem Hochvakuumpumpmodul aufgenommenen Antriebsleistung bei hohen Ansaugdrücken vermieden oder zumindest reduziert wird.

Beispielsweise kann die Kupplung so ausgebildet sein, dass die Kupplung bis zu einem bestimmten Grenzdrehmoment, welches auch als Abrissdrehmoment bezeichnet wird, eine drehfeste Kopplung der gemeinsamen Rotorwelle mit dem drehbar mit der gemeinsamen Rotorwelle gekoppelten Rotor bewirkt und somit dieselbe Antriebs- und Abtriebsdrehzahl vorliegen, und dass die Kupplung bei Erreichen des Grenzdrehmoments keine drehfeste Kopplung mehr bewirkt, sondern z.B. durchrutscht, so dass die Abtriebsdrehzahl geringer ist als die Antriebsdrehzahl. Das Grenzdrehmoment ist vorzugsweise so bemessen, dass es bei der Betriebsdrehzahl der Rotoren der Vakuumpumpe erreicht wird, wenn der Ansaugdruck einen hohen Wert von z.B. 1 hPa erreicht.

Das Erreichen des Grenzdrehmoments bei der Betriebsdrehzahl der Rotoren der Vakuumpumpe geht insbesondere mit dem Erreichen einer bestimmten hohen Antriebsleistung für den mit der Rotorwelle drehbar gekoppelten Rotor einher, welche z.B. 100 Watt betragen kann. Wenn der Ansaugdruck ansteigt und die von dem Rotor aufgenommene Antriebsleistung einen Wert von 100 Watt erreicht, kann die Kupplung folglich durchrutschen, so dass der Rotor auf eine geringere Drehzahl abgebremst wird, während sich die gemeinsame Rotorwelle mit einer höheren Drehzahl dreht, so dass die maximale Leistungsaufnahme des Rotors begrenzt ist.

Bei der Kupplung kann es sich um eine magnetische Kupplung, insbesondere eine permanentmagnetische Kupplung, welche vorzugsweise eine antriebsseitige und eine abtriebsseitige Permanentmagnetanordnung umfasst, eine elektrische Kupplung, eine hydraulische Kupplung, eine magnetorheologische Kupplung, eine elektrorheologische Kupplung oder eine mechanische Kupplung handeln. Die Kupplung arbeitet vorzugsweise berührungslos.

Erfindungsgemäß ist das Hochvakuumpumpmodul oder das Grobvakuumpumpmodul über einen Sekundärantrieb mit der gemeinsamen Rotorwelle gekoppelt, mit dem das Hochvakuumpumpmodul oder das Grobvakuumpumpmodul drehend antreibbar ist. Erfindungsgemäß ist die dem Sekundärantrieb zugeführte, insbesondere elektrische, Antriebsleistung veränderlich und/oder verstellbar, um das Verhältnis der von dem Hochvakuumpumpmodul bereitgestellten Saugleistung zu der von dem Grobvakuumpumpmodul bereitgestellten Saugleistung zu verändern. Der Stator des Sekundärantriebs ist dabei vorzugsweise von der gemeinsamen Rotorwelle getragen und mit dieser insbesondere drehfest verbunden.

Durch die Kopplung über den Sekundärantrieb können die Rotorwelle und der mit der Rotorwelle drehbar gekoppelte Rotor mit unterschiedlichen Drehzahlen angetrieben werden. Die Rotorwelle und der mit der Rotorwelle drehbar gekoppelte Rotor drehen sich bezogen auf das Gehäuse vorzugsweise in derselben Richtung, wobei der Rotor bezogen auf das Gehäuse allerdings nicht unbedingt mit einer höheren Drehzahl rotieren muss als die gemeinsame Rotorwelle, sondern auch mit einer geringeren Drehzahl rotieren kann. Der Sekundärantrieb kann dabei wie eine Kupplung zwischen der gemeinsamen Rotorwelle und dem Rotor wirken, die einen, insbesondere über die Antriebsleistung des Sekundärantriebs, veränderlichen bzw. einstellbaren Schlupf zulässt.

Bei dem Sekundärantrieb kann es sich um einen elektrischen Antrieb, einen elektromagnetischen Antrieb, einen Druckluftantrieb oder einen Gasantrieb handeln. Der Gasantrieb umfasst vorzugsweise eine auf der gemeinsamen Rotorwelle installierte Gasturbine mit Gasverbrennung. Obwohl dies nicht zur Erfindung gehört, können der Rotor des Hochvakuumpumpmoduls und der Rotor des Grobvakuumpumpmoduls generell durch separate Antriebe drehend antreibbar sein. Zum Beispiel kann im Rahmen der vorstehend beschriebenen Ausführungsform mit zwei separaten Rotorwellen jeweils ein Antrieb für jede Rotorwelle vorgesehen sein. Erfindungsgemäß sind mit einem Rotor, der mit einer gemeinsamen Rotorwelle drehbar gekoppelt ist, die gemeinsame Rotorwelle mit einem Antrieb und der Rotor mit einem separaten Sekundärantrieb antreibbar.

Vorzugsweise ist eine Steuereinheit vorgesehen, die dazu ausgebildet ist, die den separaten Antrieben jeweils zugeführte, insbesondere elektrische, Antriebsleistung zu verändern, um das Verhältnis der Saugleistung beider Pumpmodule anzupassen. Beispielsweise kann die Steuereinheit erkennen, wenn die von dem Hochvakuumpumpmodul aufgenommene Antriebsleistung einen hohen Wert annimmt. Wenn die Steuereinheit erkennt, dass nicht genug Antriebsleistung für das Grobvakuumpumpmodul zur Verfügung steht, kann die Steuereinheit die dem Hochvakuumpumpmodul zugeführte Antriebsleistung reduzieren. Die dem Grobvakuumpumpmodul zur Verfügung gestellte Antriebsleistung kann in diesem Fall erhöht oder konstant gehalten werden. Die Steuereinheit kann die zugeführten Antriebsleistungen so anpassen, dass das Grobvakuumpumpmodul mit einer Betriebsdrehzahl betrieben wird und die Drehzahl des Hochvakuumpumpmoduls bei hohen Ansaugdrücken gegebenenfalls geringer ist als die Drehzahl das Grobvakuumpumpmoduls. Gegebenenfalls kann dem Hochvakuumpumpmodul in einem bestimmten Zustand der Wirkverbindung auch gar keine elektrische Antriebsleistung zur Verfügung gestellt werden, z.B. um eine hohe Pumpeffizienz bei besonders hohen Ansaugdrücken zu erreichen.

Gemäß einer vorteilhaften, jedoch nicht erfindungsgemäßen Ausführungsform ist der Anteil der durch den Pumpeneinlass angesaugten Gaslast, der durch das Hochvakuumpumpmodul förderbar ist, und/oder der Anteil der durch den Pumpeneinlass angesaugten Gaslast, der durch das Grobvakuumpumpmodul förderbar ist, veränderlich und/oder verstellbar, um das Verhältnis der von dem Hochvakuumpumpmodul bereitgestellten Saugleistung zu der von dem Grobvakuumpumpmodul bereitgestellten Saugleistung zu verändern. Beispielsweise kann in einem ersten Zustand der Wirkverbindung die gesamte durch den Pumpeneinlass angesaugte Gaslast sowohl durch das Hochvakuumpumpmodul als auch durch das Grobvakuumpumpmodul gefördert werden, d.h. dass das Hochvakuumpumpmodul und das Grobvakuumpumpmodul in Bezug auf die gesamte Gaslast pumpwirksam in Reihe geschaltet sind. In einem zweiten Zustand kann z.B. nur ein Teil der durch den Pumpeneinlass angesaugten Gaslast durch das Hochvakuumpumpmodul förderbar sein, während ein anderer Teil ausschließlich durch das Grobvakuumpumpmodul förderbar ist. Der zweite Zustand kann z.B. bei hohen Ansaugdrücken eingenommen werden, um das Hochvakuumpumpmodul zu entlasten und eine übermäßige Erhöhung der von dem Hochvakuumpumpmodul aufgenommenen Antriebsleistung zu vermeiden.

Prinzipiell kann in dem zweiten Zustand auch überhaupt keine Gaslast durch das Hochvakuumpumpmodul gefördert werden, insbesondere bei besonders hohen Ansaugdrücken. Es können mehr als zwei verschiedene Zustände der Wirkverbindung vorgesehen sein, in denen jeweils unterschiedliche Anteile der durch den Pumpeneinlass angesaugten Gaslast durch das Hochvakuumpumpmodul einerseits und das Grobvakuumpumpmodul andererseits förderbar sind.

Eine weitere Ausführungsform sieht vor, dass das Hochvakuumpumpmodul und/oder das Grobvakuumpumpmodul mehrere Pumpstufen umfasst. Der Anteil der durch das jeweilige Pumpmodul geförderten Gaslast, der durch eine bestimmte Pumpstufe des Pumpmoduls förderbar ist, ist dabei vorzugsweise veränderlich und/oder verstellbar.

Diese Veränderlichkeit bzw. Verstellbarkeit dient vorzugsweise dazu, die Gaslastverteilung zwischen dem Hochvakuumpumpmodul und dem Grobvakuumpumpmodul und damit das Verhältnis der von dem Hochvakuumpumpmodul bereitgestellten Saugleistung zu der von dem Grobvakuumpumpmodul bereitgestellten Saugleistung zu verändern. Beispielsweise kann das Hochvakuumpumpmodul dadurch entlastet werden, dass alle Pumpstufen des Grobvakuumpumpmoduls zum Pumpen der angesaugten Gaslast eingesetzt werden. Die Veränderlichkeit und/oder Verstellbarkeit kann alternativ oder zusätzlich dazu dienen, die Aufteilung der Gaslast innerhalb eines Pumpmoduls zu verändern, z.B. dann, wenn ein Pumpmodul abgeschaltet ist und die gesamte Gaslast durch das andere Pumpmodul gefördert wird.

Ganz prinzipiell ist es bevorzugt, wenn das Hochvakuumpumpmodul und das Grobvakuumpumpmodul zumindest in einem Zustand der Wirkverbindung oder in jedem Zustand der Wirkverbindung pumpwirksam in Serie geschaltet sind, wobei das Hochvakuumpumpmodul stromaufwärts des Grobvakuumpumpmoduls angeordnet ist, so dass das Gas zuerst durch das Hochvakuumpumpmodul und anschließend durch das Grobvakuumpumpmodul gefördert wird.

Im Rahmen der vorstehend beschriebenen Veränderung der Gaslastverteilung kann auch ein Wechsel zwischen einem seriellen Pumpbetrieb der beiden Pumpmodule und einem parallelen Pumpbetrieb der Pumpmodule ermöglicht werden. Alternativ oder zusätzlich kann ein Wechsel zwischen einem seriellen Pumpbetrieb und einem parallelen Pumpbetrieb verschiedener Pumpstufen eines Pumpmoduls ermöglicht werden.

Vorzugsweise ist wenigstens ein Ventil vorgesehen, wobei der jeweilige Anteil der Gaslast, d.h. der Anteil der durch den Pumpeneinlass angesaugten Gaslast, der durch das Hochvakuumpumpmodul gefördert wird, der Anteil der durch den Pumpeneinlass angesaugten Gaslast, der durch das Grobvakuumpumpmodul gefördert wird, oder der Anteil der durch das jeweilige Pumpmodul geförderten Gaslast, der durch eine bestimmte Pumpstufe des jeweiligen Pumpmoduls gefördert wird, durch Verändern einer Schaltstellung des Ventils veränderbar ist. Es können auch mehrere Ventile vorgesehen sein und/oder mehrere der vorstehend genannten Anteile durch Veränderung der Schaltstellung eines oder mehrerer Ventile veränderbar sein.

Es kann z.B. ein zwischen dem Pumpeneinlass und dem Hochvakuumpumpmodul angeordnetes Ventil und/oder ein zwischen dem Pumpeneinlass und dem Grobvakuumpumpmodul angeordnetes Ventil vorgesehen sein, um den Gasleitwert zwischen dem Pumpeneinlass und dem Hochvakuumpumpmodul bzw. zwischen dem Pumpeneinlass und dem Grobvakuumpumpmodul und dadurch den Anteil der dem jeweiligen Pumpmodul zugeführten Gaslast zu verändern. Es kann auch ein zwischen dem Einlass eines Pumpmoduls und einer bestimmten Pumpstufe des Pumpmoduls angeordnetes Ventil vorgesehen sein, um den Gasleitwert zwischen dem Einlass des Pumpmoduls und der jeweiligen Pumpstufe und dadurch den Anteil der der jeweiligen Pumpstufe zugeführten Gaslast zu verändern.

Zumindest ein Ventil oder jedes Ventil kann so ausgebildet sein, dass es seine Schaltstellung beim Erreichen eines bestimmten Einlass- oder Auslassdrucks oder eines bestimmten Unterschieds zwischen dem Einlass- und dem Auslassdruck selbsttätig verändert, z.B. indem es sich bei Erreichen eines hohen Einlassdrucks selbsttätig öffnet. Die Ventile können auch automatisch verstellbar sein, beispielsweise durch elektrische Betätigung.

Bei den vorstehend beschriebenen Ausführungsformen, bei denen die Verteilung der Gaslast auf die beiden Pumpmodule bzw. die Pumpstufen eines Pumpmoduls veränderbar ist, kann die örtliche Druckverteilung über die Pumpmodule und Pumpstufen der Vakuumpumpe hinweg durch Änderung der Gaslastverteilung, vorzugsweise automatisch, so anpassbar sein, dass sie weniger schwankt als der Ansaugdruck der Vakuumpumpe. Die Gaslastverteilung kann selbsttätig oder automatisch so angepasst werden, dass die Vakuumpumpe in allen Betriebszuständen im Wesentlichen bei ihrer Betriebsdrehzahl betrieben werden kann. Die Leistungsaufnahme der Vakuumpumpe kann dabei unabhängig von dem Ansaugdruck und der Gaslast zumindest näherungsweise konstant gehalten werden, wobei in jedem Betriebszustand eine moderate Leistungsaufnahme und eine hohe Pumpeffizienz sichergestellt wird.

Prinzipiell können die Statoren beider Pumpmodule drehfest mit dem Gehäuse verbunden bzw. durch das Gehäuse gebildet sein.

Gemäß einer Ausführungsform ist ein Stator des Hochvakuumpumpmoduls oder ein Stator des Grobvakuumpumpmoduls gegenüber dem Gehäuse drehend antreibbar. Bei dieser Ausgestaltung kann eine zusätzliche Pumpwirkung des jeweiligen Pumpmoduls erreicht werden, indem der Stator in Bezug auf das Gehäuse in einer zu dem Rotor des jeweiligen Pumpmoduls entgegengesetzten Drehrichtung angetrieben wird. Der Stator des jeweils anderen Pumpmoduls ist vorzugsweise drehfest mit dem Gehäuse verbunden. Die Drehzahl des drehbaren Stators gegenüber dem Gehäuse ist vorzugsweise veränderlich und/oder verstellbar, um das Verhältnis der von dem Hochvakuumpumpmodul bereitgestellten Saugleistung zu der von dem Grobvakuumpumpmodul bereitgestellten Saugleistung zu verändern.

Unter der Drehzahl eines Rotors eines Pumpmoduls oder der Drehzahl eines Pumpmoduls ist im Rahmen der vorliegenden Beschreibung, sofern nicht anders angegeben, die Drehzahl des Rotors des Pumpmoduls relativ zu dem Gehäuse oder gleichermaßen die Drehzahl des Rotors des Pumpmoduls relativ zu dem, ggf. drehbeweglichen, Stator des Pumpmoduls zu verstehen. Bei einer Ausgestaltung, bei der die Statoren der Pumpmodule drehfest mit dem Gehäuse gekoppelt sind, sind diese Drehzahlen identisch.

Gemäß einer Ausführungsform ist die Wirkverbindung abhängig von der von dem Hochvakuumpumpmodul aufgenommenen Antriebsleistung und/oder von der von dem Grobvakuumpumpmodul aufgenommenen Antriebsleistung automatisch verstellbar. Die aufgenommene Antriebsleistung kann dabei von einer Steuereinheit bestimmt werden, beispielsweise indem eine einem Antrieb des jeweiligen Pumpmoduls zugeführte elektrische Antriebsleistung ermittelt wird. Die Verstellung der Wirkverbindung kann dabei derart erfolgen, dass die dem Hochvakuumpumpmodul zugeführte Antriebsleistung beschränkt ist.

Gemäß einer weiteren Ausführungsform ist die Wirkverbindung abhängig von einem Druck des zu pumpenden Gases automatisch verstellbar. Bevorzugt ist die Wirkverbindung abhängig von dem Ansaugdruck, d.h. dem an dem Pumpeneinlass vorliegenden Druck des zu pumpenden Gases, automatisch verstellbar. Gemäß einer weiteren Ausführungsform ist die Wirkverbindung abhängig von der Drehzahl des Hochvakuumpumpmoduls und/oder der Drehzahl des Grobvakuumpumpmoduls automatisch verstellbar. Die Verstellung der Wirkverbindung kann durch eine Steuereinheit vorgenommen werden, welche den jeweiligen Druck bzw. die jeweilige Drehzahl, insbesondere durch Auswerten der Ausgangssignale eines entsprechende Druck- oder Drehzahlsensors, ermittelt.

Eine oder jede Rotorwelle der Vakuumpumpe, beispielsweise eine separate Rotorwelle des Hochvakuumpumpmoduls, eine separate Rotorwelle des Grobvakuumpumpmoduls oder eine gemeinsame Rotorwelle beider Module ist vorzugsweise drehbar gelagert, insbesondere durch ein oder mehrere mechanische und/oder magnetische Lager. Beispielsweise kann die jeweilige Rotorwelle durch zwei Kugellager, durch ein Kugellager und ein passives Magnetlager, durch ein Kugellager und ein aktives Magnetlager, durch ein passives und ein aktives Magnetlager, durch zwei aktive Magnetlager, durch zwei Luftlager oder durch ein Luftlager einerseits und ein Kugellager oder ein passives oder aktives Magnetlager andererseits drehbar gelagert sein.

Insbesondere wenn eine Rotorwelle der Vakuumpumpe mit zumindest einem Luftlager gelagert ist, kann die Vakuumpumpe zweiflutig aufgebaut sein. Die zweiflutige Vakuumpumpe kann dazu ausgebildet sein, in der Mitte das zu pumpende Gas durch einen Pumpeneinlass anzusaugen und das gepumpte Gas an einander gegenüberliegenden Enden der Vakuumpumpe auszustoßen.

Im Falle einer gemeinsamen Rotorwelle mit einem auf der gemeinsamen Rotorwelle drehbar gelagerten Rotor des Hochvakuumpumpmoduls oder Grobvakuumpumpmoduls kann der Rotor mechanisch und/oder magnetisch auf der gemeinsamen Rotorwelle drehgelagert sein. Konkret kann der Rotor durch zwei Kugellager, durch ein Kugellager und ein passives Magnetlager, durch ein Kugellager und ein aktives Magnetlager, durch ein passives und ein aktives Magnetlager, oder durch zwei aktive Magnetlager drehbar auf der gemeinsamen Rotorwelle gelagert sein.

Wenn erfindungsgemäß der auf der gemeinsamen Rotorwelle drehbar gelagerte Rotor über einen Sekundärantrieb mit der Rotorwelle gekoppelt ist, kann der Sekundärantrieb gleichzeitig auch die Funktion eines Lagers zwischen dem Rotor und der gemeinsamen Rotorwelle übernehmen. Insbesondere kann ein als elektromagnetischer Antrieb ausgebildeter Sekundärantrieb gleichzeitig die Funktion eines aktiven Magnetlagers übernehmen.

Gemäß der vorbestehenden Beschreibung kann die Vakuumpumpe zumindest einen Antrieb für eine separate Rotorwelle des Hochvakuumpumpmoduls, einen Antrieb für eine separate Rotorwelle des Grobvakuumpumpmoduls oder einen Antrieb für eine erfindungsgemäße, gemeinsame Rotorwelle der Vakuumpumpe umfassen. Der Antrieb ist vorzugsweise als elektrischer Antrieb, als elektromagnetischer Antrieb, als Druckluftantrieb oder als Gasantrieb mit einer Gasturbine und einer Gasverbrennung ausgebildet.

Das Hochvakuumpumpmodul umfasst vorzugsweise eine oder mehrere molekulare Pumpstufen, die im molekularen Strömungsbereich arbeiten. Das Hochvakuumpumpmodul kann eine oder mehrere axiale oder radialen Turbomolekularpumpstufen, eine oder mehrere Holweckpumpstufen, eine oder mehrere Kreuzgewindepumpstufen und/oder eine oder mehrere andere, insbesondere molekulare Pumpstufen oder eine beliebige Kombination der vorstehend genannten Pumpstufen umfassen.

Das Grobvakuumpumpmodul umfasst vorzugsweise ein oder mehrere Pumpstufen, die im viskosen Strömungsbereich arbeiten. Das Grobvakuumpumpmodul kann z.B. eine oder mehrere Seitenkanalpumpstufen, eine oder mehrere Kreuzgewindepumpstufen, eine oder mehrere Kreuzspiralpumpstufen und/oder eine oder mehrere andere, insbesondere im viskosen Strömungsbereich arbeitende Pumpstufen oder eine beliebige Kombination der vorstehend genannten Pumpstufen umfassen.

Weiterer Gegenstand der Erfindung ist ein Verfahren nach Anspruch 9.

Durch die Veränderung des Saugleistungsverhältnisses durch die Änderung bzw. Verstellung der Wirkverbindung kann eine übermäßige Erhöhung der Leistungsaufnahme des Hochvakuumpumpmoduls, insbesondere bei hohen Ansaugdrücken, vermieden werden.

Das Verfahren kann mit einer erfindungsgemäßen Vakuumpumpe gemäß der vorliegenden Beschreibung durchgeführt werden. Die hierin in Bezug auf die Vakuumpumpe sowie deren Verwendung beschriebenen Vorteile und vorteilhaften Ausführungsformen stellen entsprechende Vorteile und vorteilhafte Ausführungsformen des erfindungsgemäßen Verfahrens dar. Nachfolgend wird die Erfindung beispielhaft anhand vorteilhafter Ausführungsformen unter Bezugnahme auf die beigefügten Figuren beschrieben. Es zeigen:
- Fig. 1: eine Vakuumpumpe gemäß dem Stand der Technik; und
- Fig. 2 bis 5: jeweils eine Vakuumpumpe gemäß einer Ausführungsform, wobei lediglich Fig. 3 eine Grundlage der Erfindung darstellt.

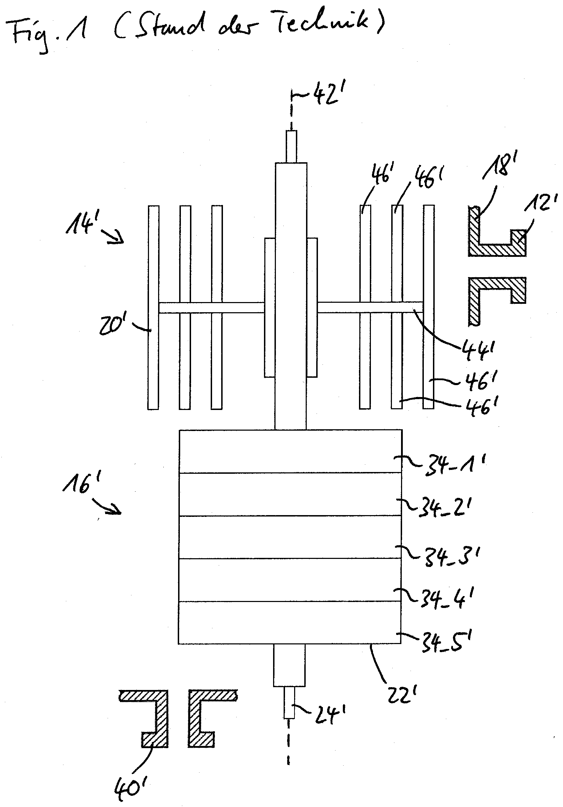

Die in Fig. 1 gezeigte Vakuumpumpe umfasst ein Hochvakuumpumpmodul 14' und ein Grobvakuumpumpmodul 16', welche in einem in Fig. 1 nur andeutungsweise dargestellten Gehäuse 18' angeordnet sind. Die Pumpmodule 14', 16' sind derart pumpwirksam in Serie geschaltet, dass das durch den Pumpeneinlass 12' angesaugte Gas in Strömungsrichtung nacheinander durch die Pumpstufen des Hochvakuumpumpmoduls 14' und anschließend durch die Pumpstufen 34_1' bis 34_5' des Grobvakuumpumpmoduls 16' gepumpt und anschließend durch den Pumpenauslass 40' ausgestoßen wird.

In Fig. 1 sind im Wesentlichen nur die rotorseitigen Bestandteile der Pumpmodule 14', 16' gezeigt. Das Hochvakuumpumpmodul 14' umfasst einen Rotor 20' mit mehreren von einer gemeinsamen Rotornabe 44' getragenen und in radialer Richtung ineinander geschachtelten zylindrischen Holweckrotorhülsen 46'. Die inneren und äußeren radialen Mantelflächen der Holweckrotorhülsen 46' liegen jeweils einer inneren bzw. äußeren Mantelfläche einer von mehreren in Fig. 1 nicht dargestellten Holweckstatorhülsen unter Ausbildung eines engen radialen Holweckspalts gegenüber. Die einander gegenüberliegenden rotor- und statorseitigen Mantelflächen bilden jeweils eine von mehreren Holweckpumpstufe, die pumpwirksam miteinander in Serie geschaltet sind.

Das Grobvakuumpumpmodul 16' umfasst einen in Fig. 1 lediglich schematisch dargestellten Rotor 22', welcher mit einem entsprechenden, in Fig. 1 nicht dargestellten Stator des Grobvakuumpumpmoduls 16' fünf pumpwirksam in Serie geschaltete Pumpstufen 34_1' bis 34_5' bildet.

Bei der in Fig. 1 dargestellten Vakuumpumpe sind der Rotor 20' des Hochvakuumpumpmoduls 14' und der Rotor 22' des Grobvakuumpumpmoduls 16' auf einer gemeinsamen, um eine Rotationsachse 42' rotierend antreibbaren Rotorwelle 24' angeordnet und mit dieser drehfest gekoppelt, so dass der Rotor 20' und der Rotor 22' mit derselben Drehzahl rotieren.

Wenn an den Pumpeneinlass 12' ein Gas mit einem hohen Ansaugdruck ansteht, wird infolge der unveränderlichen Wirkverbindung zwischen den Pumpmodulen 14', 16' der Anteil der zum drehenden Antreiben der Rotorwelle 24' aufgewendeten Antriebsleistung, der von dem Hochvakuumpumpmodul 14' bzw. dessen Rotor 20' aufgenommen wird, erhöht, ohne dass sich die durch das Hochvakuumpumpmodul 14' bereitgestellte Pumpleistung in entsprechender Weise erhöht, wodurch die Pumpeffizienz der Vakuumpumpe herabgesetzt wird.

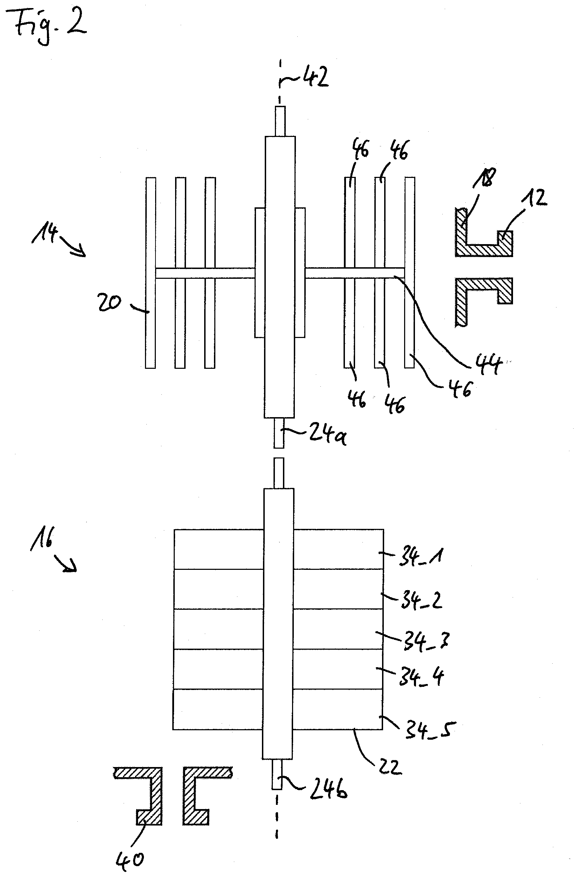

Fig. 2 bis 5 zeigen jeweils eine Vakuumpumpe gemäß einer Ausführungsform. Die einander entsprechenden Bestandteile der in Fig. 1 bis 5 gezeigten Vakuumpumpen sind in Fig. 1 mit gestrichenen Bezugszeichen, z.B. 40', und in Fig. 2 bis 5 mit ungestrichenen Bezugszeichen, z.B. 40, bezeichnet.

Bei der in Fig. 2 gezeigten Vakuumpumpe weisen das Hochvakuumpumpmodul 14 und das Grobvakuumpumpmodul 16 voneinander getrennte Rotorwellen 24a, 24b auf, mit denen der jeweils zugehörige Rotor 20, 22 drehfest verbunden ist. Bei der in Fig. 2 gezeigten Vakuumpumpe sind die beiden Rotorwellen 24a, 24b koaxial angeordnet und um eine gemeinsame Rotationsachse 42 drehbar, wobei die Rotorwellen 24a, 24b aber in einer anderen Variante auch unterschiedliche Drehachsen haben könnten.

Die Rotoren 20, 22 sind mit unterschiedlichen Drehzahlen antreibbar, wobei das Verhältnis der Drehzahlen durch eine in Fig. 2 nicht dargestellte Steuereinheit automatisch verstellbar ist. Das Drehzahlverhältnis ist automatisch so verstellbar, dass das Verhältnis der Drehzahl des Rotors 20 zu der Drehzahl des Rotors 22 verringert wird, wenn der Ansaugdruck bei der Betriebsdrehzahl der Rotoren 20, 22 einen vorgegebenen hohen Wert erreicht, um eine übermäßige, durch den hohen Ansaugdruck hervorgerufene Erhöhung der von dem Hochvakuumpumpmodul 14 aufgenommenen Antriebsleistung zu verhindern.

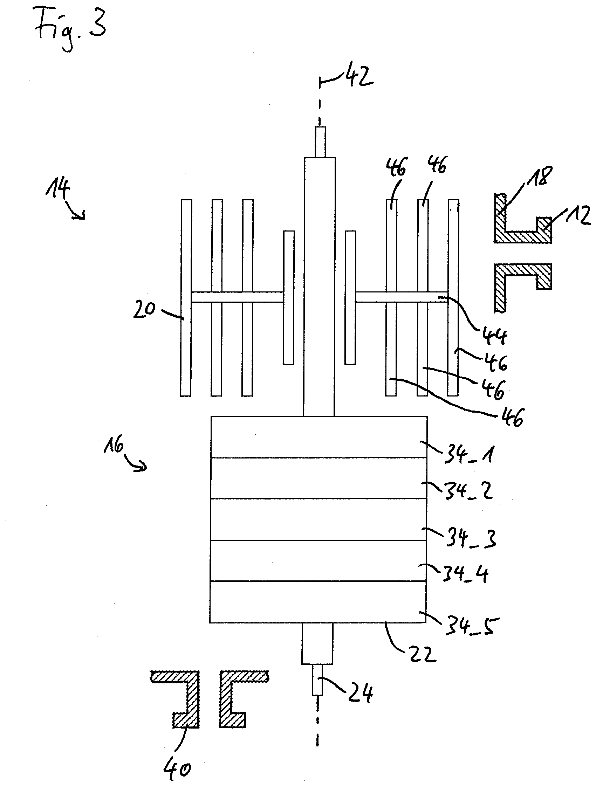

Die in Fig. 3 gezeigte Vakuumpumpe umfasst eine gemeinsame Rotorwelle 24 für das Hochvakuumpumpmodul 14 und für das Grobvakuumpumpmodul 16. Wie in Fig. 3 schematisch durch einen Abstand zwischen dem Rotor 20 und der Rotorwelle 24 dargestellt, ist der Rotor 20 bei dieser Ausgestaltung drehbar auf der Rotorwelle 24 gelagert und von dieser getragen. Der Rotor 22 ist hingegen drehfest mit der Rotorwelle 24 verbunden, so dass die Rotoren 20, 22 relativ zueinander drehbar sind.

Der Rotor 20 kann über eine Kupplung oder erfindungsgemäß über einen Sekundärantrieb drehbar mit der Rotorwelle 24 gekoppelt sein. Das Verhältnis der Drehzahlen der Rotoren 20, 22 ist durch Verändern bzw. Verstellen der Kupplung oder des Sekundärantriebs derart veränderbar, dass die Pumpeffizienz der Pumpe in der vorstehend in Bezug auf Fig. 2 beschriebenen Weise erhöht wird.

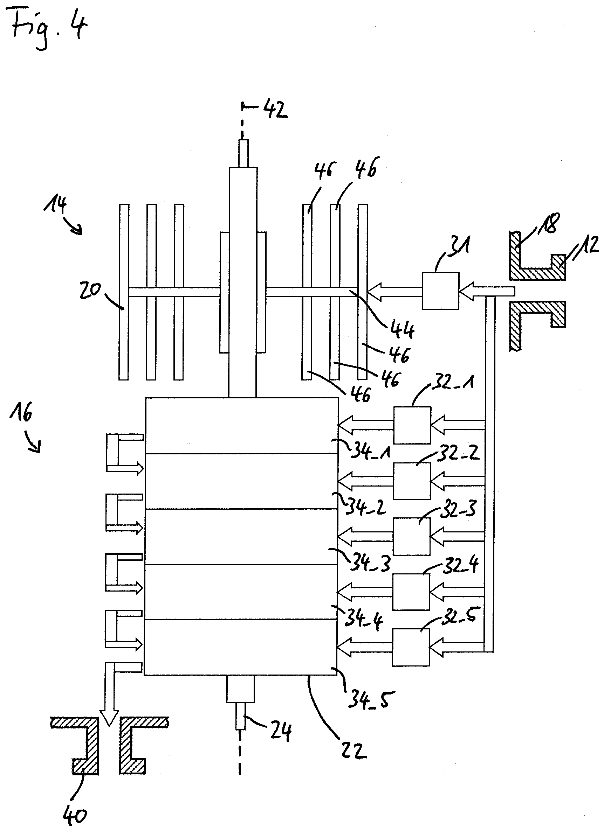

Bei der in Fig. 4 gezeigten Vakuumpumpe sind der Rotor 20 und der Rotor 22 mit einer gemeinsamen Rotorwelle 24 drehfest verbunden. Die Vakuumpumpe umfasst mehrere Einlassventile 31 und 32_1 bis 32_5, wobei der Einlass der Einlassventile 31, 32_1 bis 32_5 jeweils gasleitend mit dem Pumpeneinlass 12 verbunden ist und der Auslass der Einlassventile 31, 32_1 bis 32_5 jeweils gasleitend mit dem Einlass des Hochvakuumpumpmoduls 14 bzw. dem Einlass einer Pumpstufe 34_1 bis 34_5 des Grobvakuumpumpmoduls 16 verbunden ist. Die Schaltstellungen der Ventile 31, 32_1 bis 32_5 sind durch eine in Fig. 4 nicht dargestellte Steuereinheit einstellbar.

Der Gasfluss durch die Pumpe ist in Fig. 4 durch Pfeile veranschaulicht. Das Hochvakuumpumpmodul 14 und die Pumpstufen 34_1 bis 34_5 des Grobvakuumpumpmoduls 16 sind in dieser Reihenfolge pumpwirksam in Serie geschaltet, so dass das von dem Hochvakuumpumpmodul 14 bzw. einer stromaufwärtigen Pumpstufe 34_1 bis 34_4 ausgestoßene Gas durch alle jeweiligen, in Strömungsrichtung folgenden Pumpstufen 34_1 bis 34_5 gepumpt und zu dem Pumpenauslass 40 gefördert wird.

Mit der Steuereinheit lassen sich unterschiedliche Zustände einstellen, die jeweils durch eine bestimmte Schaltstellung der Ventile 31, 32_1 bis 32_5 charakterisiert sind und in denen jeweils eine bestimmten Verteilung der durch den Pumpeneinlass 12 angesaugten Gaslast auf die Pumpmodule 14, 16 bzw. auf die einzelnen Pumpstufen 34_1 bis 34_5 erfolgt. Beispielsweise können verschiedene Zustände einstellbar sein, in denen jeweils nur eines der Ventile 31, 32_1 bis 32_5 geöffnet ist und alle anderen Ventile 31, 32_1 bis 32_5 geschlossen sind, so dass die gesamte durch den Pumpeneinlass 12 angesaugte Gaslast durch das dem Ventil 31, 32_1 bis 32_5 zugeordnete Pumpmodul 14, 16 bzw. die zugeordnete Pumpstufe 34_1 bis 34_5 sowie alle in Strömungsrichtung folgenden Pumpmodule 16 bzw. Pumpstufen 34_1 bis 34_5 gefördert wird.

Nachfolgend wird ein Beispiel einer Steuerung der Ventile 31, 32_1 bis 32_5 beschrieben:
Bei niedrigen Ansaugdrücken ist das Ventil 31 geöffnet und die Ventile 32_1 bis 32_5 sind geschlossen, so dass die gesamte durch den Pumpeneinlass 12 angesaugte Gaslast der Reihe nach durch die Pumpstufen des Hochvakuumpumpmoduls 14 und anschließend durch die Pumpstufen 34_1 bis 34_5 des Grobvakuumpumpmoduls 16 zu dem Pumpenauslass 40 gefördert wird. Wenn der Ansaugdruck an dem Pumpeneinlass 12 einen bestimmten Wert von z.B. 1 hPa erreicht, wird das Ventil 32_1 geöffnet und gleich darauf das Ventil 31 geschlossen, so dass die gesamte Gaslast der Reihe nach durch die Pumpstufen 34_1 bis 34_5 gefördert wird, während das Hochvakuumpumpmodul 14 keine Gaslast fördert. Dadurch wird die Belastung des Hochvakuumpumpmoduls 14 reduziert und die Pumpeffizienz bei hohen Ansaugdrücken erhöht.

Wenn der Ansaugdruck einen noch höheren Schwellwert von z.B. 5 hPa erreicht, wird das Ventil 32_2 geöffnet und gleich darauf das Ventil 32_1 geschlossen, so dass die gesamte Gaslast der Reihe nach durch die Pumpstufen 34_2 bis 34_5 zu dem Pumpenauslass 40 gefördert wird, während durch das Hochvakuumpumpmodul 14 und die Pumpstufe 34_1 keine Gaslast gefördert wird. Dadurch wird die Pumpeffizienz bei entsprechend hohen Ansaugdrücken zusätzlich optimiert. Mit weiter steigendem Ansaugdruck werden vorzugsweise die Ventile 32_3 bis 32_5 in dieser Reihenfolge geöffnet und alle anderen Ventile 31, 32_1 bis 32_5 jeweils geschlossen, um die Pumpeffizienz weiter zu steigern.

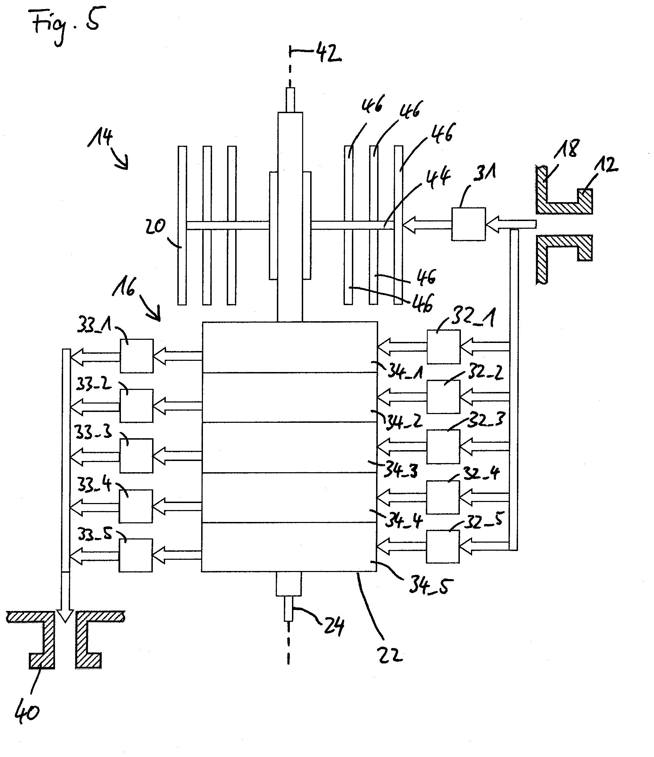

Die in Fig. 5 gezeigte Vakuumpumpe entspricht im Wesentlichen der in Fig. 4 gezeigten Vakuumpumpe, wobei zusätzlich Auslassventile 33_1 bis 33_5 vorgesehen sind, die in ihrem geöffneten Zustand jeweils den Auslass einer Pumpstufe 34_1 bis 34_5 gasleitend mit dem Pumpenauslass 40 verbinden. Bei dieser Ausgestaltung können prinzipiell mehrere Einlassventile 31, 32_1 bis 32_5 und/oder mehrere Auslassventile 33_1 bis 33_5 gleichzeitig geöffnet sein. Abhängig davon, ob die Ventile 33_1 bis 33_4 geöffnet oder geschlossen sind, gelangt das von der zugehörigen Pumpstufe 34_1 bis 34_4 jeweils ausgestoßene Gas entweder direkt zu dem Pumpenauslass 40, wie in Fig. 5 durch entsprechende Pfeile angedeutet, oder es gelangt in der in Fig. 4 dargestellten Weise zu dem Einlass der in Strömungsrichtung jeweils nachfolgenden Pumpstufe 34_2 bis 34_5.

Die Schaltstellung der Ventile 33_1 bis 33_4 bestimmt folglich, ob die zugehörige Pumpstufe 34_1 bis 34_4 jeweils parallel oder in Serie zu den anderen Pumpstufen 34_1 bis 34_5 pumpt. Die Auslassventile 33_1 bis 33_5 können als Überstromventile ausgebildet sein, die ab einem bestimmten Druck an ihrem Einlass oder ab einem bestimmten Druckunterschied zwischen ihrem Auslass und ihrem Auslass selbsttätig öffnen. Die Auslassventile 33_1 bis 33_5 können auch als, insbesondere elektrisch, verstellbare Ventile ausgebildet sein.

Durch die Möglichkeit, in geeigneter Weise zwischen einem seriellen und einem parallelen Pumpbetrieb zu wechseln, wird die Pumpeffizienz der Vakuumpumpe noch weiter gesteigert. Beispielsweise können, wenn der Ansaugdruck der Vakuumpumpe zumindest annähernd so hoch ist wie der Atmosphärendruck, alle Einlassventile 32_1 bis 32_5 und Auslassventile 33_1 bis 33_5 geöffnet werden, während das Einlassventil 31 geschlossen werden kann, so dass alle Pumpstufen 34_1 bis 34_5 parallel pumpen. Dadurch kann die Saugleistung der Vakuumpumpe optimiert und gleichzeitig eine gute Pumpeffizienz sichergestellt werden.

### Bezugszeichenliste

- 12, 12': Pumpeneinlass
- 14, 14': Hochvakuumpumpmodul
- 16, 16': Grobvakuumpumpmodul
- 18, 18': Gehäuse
- 20, 20': Rotor
- 22, 22': Rotor
- 24, 24': gemeinsame Rotorwelle
- 24a, 24b: Rotorwelle
- 31: Einlassventil
- 32_1 bis 32_5: Einlassventil
- 33_1 bis 33_5: Auslassventil
- 34_1 bis 34_5: Pumpstufe
- 34_1' bis 34_5': Pumpstufe
- 40, 40': Pumpenauslass
- 42, 42': Rotationsachse
- 44, 44': Rotornabe
- 46, 46': Holweckrotorhülse

## Patentansprüche

1. Vakuumpumpe, insbesondere gegen Atmosphärendruck ausstoßende Vakuumpumpe, mit einem Pumpeneinlass (12) sowie mit wenigstens einem Hochvakuumpumpmodul (14) und wenigstens einem Grobvakuumpumpmodul (16), die in einem gemeinsamen Gehäuse (12) der Vakuumpumpe angeordnet sind und zur Bereitstellung einer Pumpwirkung für ein an dem Pumpeneinlass (12) anstehendes Gas miteinander wirkverbunden sind, wobei die Wirkverbindung veränderlich und/oder verstellbar ist, um das Verhältnis der von dem Hochvakuumpumpmodul (14) bereitgestellten Saugleistung zu der von dem Grobvakuumpumpmodul (16) bereitgestellten Saugleistung zu verändern,
wobei ein Rotor (20) des Hochvakuumpumpmoduls (14) einerseits und ein Rotor (22) des Grobvakuumpumpmoduls (16) andererseits mit unterschiedlichen Drehzahlen drehend antreibbar sind und das Verhältnis der Drehzahl des Rotors (20) des Hochvakuumpumpmoduls (14) zu der Drehzahl des Rotors (22) des Grobvakuumpumpmoduls (16) veränderlich und/oder verstellbar ist, um das Verhältnis der von dem Hochvakuumpumpmodul (14) bereitgestellten Saugleistung zu der von dem Grobvakuumpumpmodul (16) bereitgestellten Saugleistung zu verändern,
wobei das Hochvakuumpumpmodul (14) und das Grobvakuumpumpmodul (16) eine gemeinsame Rotorwelle (24) aufweisen, wobei der Rotor (20) des Hochvakuumpumpmoduls (14) oder der Rotor (22) des Grobvakuumpumpmoduls (16) relativ zu der Rotorwelle (24) drehbar mit der Rotorwelle (24) gekoppelt ist,
**dadurch gekennzeichnet, dass**
das Hochvakuumpumpmodul (14) oder das Grobvakuumpumpmodul (16) über einen Sekundärantrieb mit der gemeinsamen Rotorwelle (24) gekoppelt ist, mit dem das Hochvakuumpumpmodul (14) oder das Grobvakuumpumpmodul (16) drehend antreibbar ist, wobei die dem Sekundärantrieb zugeführte Antriebsleistung veränderlich und/oder verstellbar ist, um das Verhältnis der von dem Hochvakuumpumpmodul (14) bereitgestellten Saugleistung zu der von dem Grobvakuumpumpmodul (16) bereitgestellten Saugleistung zu verändern.

2. Vakuumpumpe nach Anspruch 1,
**dadurch gekennzeichnet, dass**
die Wirkverbindung derart selbsttätig veränderlich und/oder automatisch verstellbar ist, dass eine durch eine Erhöhung des Drucks des an dem Pumpeneinlass (12) anstehenden Gases hervorgerufene Erhöhung der von dem Hochvakuumpumpmodul (14) im Betrieb der Vakuumpumpe aufgenommenen Antriebsleistung vermieden oder zumindest reduziert wird.

3. Vakuumpumpe nach Anspruch 1,
**dadurch gekennzeichnet, dass**
die auf die gemeinsame Rotorwelle (24) bezogene Relativdrehzahl des drehbar mit der gemeinsamen Rotorwelle (24) gekoppelten Rotors (20, 22) veränderlich und/oder verstellbar ist, um das Verhältnis der von dem Hochvakuumpumpmodul (14) bereitgestellten Saugleistung zu der von dem Grobvakuumpumpmodul (16) bereitgestellten Saugleistung zu verändern.

4. Vakuumpumpe nach Anspruch 1 oder 3,
**dadurch gekennzeichnet, dass** der Sekundärantrieb auch dazu ausgebildet ist, wie eine Kupplung zu wirken, welche einen veränderlichen bzw. einstellbaren Schlupf zulässt, sodass
der Rotor (20) des Hochvakuumpumpmoduls (14) oder der Rotor (22) des Grobvakuumpumpmoduls (16) über eine Kupplung mit der gemeinsamen Rotorwelle (24) gekoppelt ist, welche dazu ausgebildet ist, ein Drehmoment von der gemeinsamen Rotorwelle (24) auf den mit der gemeinsamen Rotorwelle (24) drehbar gekoppelten Rotor (20, 22) zu übertragen,
wobei insbesondere das Verhältnis der Antriebsdrehzahl zu der Abtriebsdrehzahl der Kupplung veränderlich und/oder verstellbar ist, um das Verhältnis der von dem Hochvakuumpumpmodul (14) bereitgestellten Saugleistung zu der von dem Grobvakuumpumpmodul (16) bereitgestellten Saugleistung zu verändern.

5. Vakuumpumpe nach Anspruch 4,
**dadurch gekennzeichnet, dass**
das Verhältnis der Antriebsdrehzahl zu der Abtriebsdrehzahl abhängig von der Drehmomentbelastung der Kupplung selbsttätig veränderlich oder automatisch verstellbar ist, vorzugsweise derart, dass das über die Kupplung übertragbare Drehmoment beschränkt ist.

6. Vakuumpumpe nach einem der Ansprüche 1 und 3 bis 5
**dadurch gekennzeichnet, dass**
der Sekundärantrieb ein elektrischer Antrieb, ein elektromagnetischer Antrieb, ein Druckluftantrieb oder ein Gasantrieb ist.

7. Vakuumpumpe nach einem der vorstehenden Ansprüche,
**dadurch gekennzeichnet, dass**
ein Stator des Hochvakuumpumpmoduls (14) oder ein Stator des Grobvakuumpumpmoduls (16) gegenüber dem Gehäuse (18) drehend antreibbar ist, wobei die Drehzahl des drehbaren Stators gegenüber dem Gehäuse (18) vorzugsweise veränderlich und/oder verstellbar ist, um das Verhältnis der von dem Hochvakuumpumpmodul (14) bereitgestellten Saugleistung zu der von dem Grobvakuumpumpmodul (16) bereitgestellten Saugleistung zu verändern.

8. Vakuumpumpe nach einem der vorstehenden Ansprüche,
**dadurch gekennzeichnet, dass**
die Wirkverbindung abhängig von der von dem Hochvakuumpumpmodul (14) aufgenommenen Antriebsleistung und/oder von der von dem Grobvakuumpumpmodul (16) aufgenommenen Antriebsleistung automatisch verstellbar ist,
und/oder dass
die Wirkverbindung abhängig von einem Druck des zu pumpenden Gases, insbesondere dem an dem Pumpeneinlass (12) vorliegenden Ansaugdruck des Gases, und/oder abhängig von der Drehzahl des Hochvakuumpumpmoduls (14) und/oder der Drehzahl des Grobvakuumpumpmoduls (16) automatisch verstellbar ist.

9. Verfahren zum Betreiben einer Vakuumpumpe, welche vorzugsweise nach einem der vorstehenden Ansprüche ausgebildet ist, welche einen Pumpeneinlass (12) sowie wenigstens ein Hochvakuumpumpmodul (14) und wenigstens ein Grobvakuumpumpmodul (16) umfasst, die in einem gemeinsamen Gehäuse (18) der Vakuumpumpe angeordnet sind und zur Bereitstellung einer Pumpwirkung für ein an dem Pumpeneinlass (12) anstehendes Gas miteinander wirkverbunden sind, wobei das Verfahren umfasst, dass die Wirkverbindung sich ändert oder verstellt wird, um das Verhältnis der von dem Hochvakuumpumpmodul (14) bereitgestellten Saugleistung zu der von dem Grobvakuumpumpmodul (16) bereitgestellten Saugleistung zu verändern, wobei ein Rotor (20) des Hochvakuumpumpmoduls (14) einerseits und ein Rotor (22) des Grobvakuumpumpmoduls (16) andererseits mit unterschiedlichen Drehzahlen drehend angetrieben werden und das Verhältnis der Drehzahl des Rotors (20) des Hochvakuumpumpmoduls (14) zu der Drehzahl des Rotors (22) des Grobvakuumpumpmoduls (16) verändert und/ oder verstellt wird, um das Verhältnis der von dem Hochvakuumpumpmodul (14) bereitgestellten Saugleistung zu der von dem Grobvakuumpumpmodul (16) bereitgestellten Saugleistung zu verändern,
wobei das Hochvakuumpumpmodul (14) und das Grobvakuumpumpmodul (16) eine gemeinsame Rotorwelle (24) aufweisen, wobei der Rotor (20) des Hochvakuumpumpmoduls (14) oder der Rotor (22) des Grobvakuumpumpmoduls (16) relativ zu der Rotorwelle (24) drehbar mit der Rotorwelle (24) gekoppelt ist,
**dadurch gekennzeichnet, dass**
das Hochvakuumpumpmodul (14) oder das Grobvakuumpumpmodul (16) über einen Sekundärantrieb mit der gemeinsamen Rotorwelle (24) gekoppelt ist, mit dem das Hochvakuumpumpmodul (14) oder das Grobvakuumpumpmodul (16) drehend angetrieben wird, wobei die dem Sekundärantrieb zugeführte Antriebsleistung verändert und/oder verstellt wird, um das Verhältnis der von dem Hochvakuumpumpmodul (14) bereitgestellten Saugleistung zu der von dem Grobvakuumpumpmodul (16) bereitgestellten Saugleistung zu verändern.

## Claims

1. A vacuum pump, in particular a vacuum pump discharging against atmospheric pressure, comprising a pump inlet (12) as well as at least one high-vacuum pump module (14) and at least one rough-vacuum pump module (16) which are arranged in a common housing (18) of the vacuum pump and which are operatively connected to one another in order to provide a pumping effect for a gas present at the pump inlet (12), wherein the operative connection is variable and/or adjustable to change the ratio of the suction power provided by the high-vacuum pump module (14) to the suction power provided by the rough-vacuum pump module (16), wherein a rotor (20) of the high-vacuum pump module (14), on the one hand, and a rotor (22) of the rough-vacuum pump module (16), on the other hand, can be rotatingly driven at different rotational speeds and the ratio of the rotational speed of the rotor (20) of the high-vacuum pump module (14) to the rotational speed of the rotor (22) of the rough-vacuum pump module (16) is variable and/or adjustable to change the ratio of the suction power provided by the high-vacuum pump module (14) to the suction power provided by the rough-vacuum pump module (16),
wherein the high-vacuum pump module (14) and the rough-vacuum pump module (16) have a common rotor shaft (24), wherein the rotor (20) of the high-vacuum pump module (14) or the rotor (22) of the rough-vacuum pump module (16) is rotatably coupled to the rotor shaft (24) relative to the rotor shaft (24),
**characterized in that**
the high-vacuum pump module (14) or the rough-vacuum pump module (16) is coupled to the common rotor shaft (24) via a secondary drive by which the high-vacuum pump module (14) or the rough-vacuum pump module (16) can be rotatingly driven, with the drive power supplied to the secondary drive being variable and/or adjustable to change the ratio of the suction power provided by the high-vacuum pump module (14) to the suction power provided by the rough-vacuum pump module (16).

2. A vacuum pump in accordance with claim 1,
**characterized in that**
the operative connection is automatically variable and/or automatically adjustable such that an increase in the drive power absorbed by the high-vacuum pump module (14) in the operation of the vacuum pump, which increase is caused by an increase in the pressure of the gas present at the pump inlet (12), is avoided or at least reduced.

3. A vacuum pump in accordance with claim 1,
**characterized in that**
the relative rotational speed of the rotor (20, 22), which is rotatably coupled to the common rotor shaft (24), with respect to the common rotor shaft (24) is variable and/or adjustable to change the ratio of the suction power provided by the high-vacuum pump module (14) to the suction power provided by the rough-vacuum pump module (16).

4. A vacuum pump in accordance with claim 1 or claim 2,
**characterized in that**
the secondary drive is also configured to act like a coupling which allows a variable or settable slip so that the rotor (20) of the high-vacuum pump module (14) or the rotor (22) of the rough-vacuum pump module (16) is coupled to the common rotor shaft (24) via a coupling which is configured to transmit a torque from the common rotor shaft (24) to the rotor (20, 22) rotatably coupled to the common rotor shaft (24),
with in particular the ratio of the input speed to the output speed of the coupling being variable and/or adjustable to change the ratio of the suction power provided by the high-vacuum pump module (14) to the suction power provided by the rough-vacuum pump module (16).

5. A vacuum pump in accordance with claim 4,
**characterized in that**
the ratio of the input speed to the output speed is automatically variable or automatically adjustable depending on the torque load on the coupling, preferably such that the torque which can be transmitted via the coupling is limited.

6. A vacuum pump in accordance with any one of the claims 1 and 3 to 5,
**characterized in that**
the secondary drive is an electric drive, an electromagnetic drive, a compressed air drive or a gas drive.

7. A vacuum pump in accordance with any one of the preceding claims,
**characterized in that**
a stator of the high-vacuum pump module (14) or a stator of the rough-vacuum pump module (16) can be rotatingly driven with respect to the housing (18), with the rotational speed of the rotatable stator with respect to the housing (18) preferably being variable and/or adjustable to change the ratio of the suction power provided by the high-vacuum pump module (14) to the suction power provided by the rough-vacuum pump module (16).

8. A vacuum pump in accordance with any one of the preceding claims,
**characterized in that**
the operative connection is automatically adjustable depending on the drive power absorbed by the high-vacuum pump module (14) and/or on the drive power absorbed by the rough-vacuum pump module (16),
and/or **in that**
the operative connection is automatically adjustable depending on a pressure of the gas to be pumped, in particular the suction pressure of the gas present at the pump inlet (12), and/or depending on the rotational speed of the high-vacuum pump module (14) and/or the rotational speed of the rough-vacuum pump module (16).

9. A method of operating a vacuum pump which is preferably configured in accordance with any one of the preceding claims and which comprises a pump inlet (12) as well as at least one high-vacuum pump module (14) and at least one rough-vacuum pump module (16) which are arranged in a common housing (18) of the vacuum pump and which are operatively connected to one another in order to provide a pumping effect for a gas present at the pump inlet (12), wherein the method comprises that the operative connection changes or is adjusted to change the ratio of the suction power provided by the high-vacuum pump module (14) to the suction power provided by the rough-vacuum pump module (16), wherein a rotor (20) of the high-vacuum pump module (14), on the one hand, and a rotor (22) of the rough-vacuum pump module (16), on the other hand, are rotatingly driven at different rotational speeds and the ratio of the rotational speed of the rotor (20) of the high-vacuum pump module (14) to the rotational speed of the rotor (22) of the rough-vacuum pump module (16) is varied and/or adjusted to change the ratio of the suction power provided by the high-vacuum pump module (14) to the suction power provided by the rough-vacuum pump module (16),
wherein the high-vacuum pump module (14) and the rough-vacuum pump module (16) have a common rotor shaft (24), wherein the rotor (20) of the high-vacuum pump module (14) or the rotor (22) of the rough-vacuum pump module (16) is rotatably coupled to the rotor shaft (24) relative to the rotor shaft (24),
**characterized in that**
the high-vacuum pump module (14) or the rough-vacuum pump module (16) is coupled to the common rotor shaft (24) via a secondary drive by which the high-vacuum pump module (14) or the rough-vacuum pump module (16) is rotatingly driven, with the drive power supplied to the secondary drive being varied and/or adjusted to change the ratio of the suction power provided by the high-vacuum pump module (14) to the suction power provided by the rough-vacuum pump module (16).

## Revendications

1. Pompe à vide, en particulier pompe à vide expulsant à l'encontre de la pression atmosphérique, comprenant une admission de pompe (12) ainsi qu'au moins un module de pompage à vide poussé (14) et au moins un module de pompage à vide grossier (16), qui sont disposés dans un boîtier commun (12) de la pompe à vide et qui sont en liaison d'action entre eux pour fournir un effet de pompage pour un gaz présent à l'admission de pompe (12), la liaison d'action étant variable et/ou réglable afin de modifier le rapport entre la puissance d'aspiration fournie par le module de pompage à vide poussé (14) et la puissance d'aspiration fournie par le module de pompage à vide grossier (16),
dans laquelle
un rotor (20) du module de pompage à vide poussé (14) d'une part et un rotor (22) du module de pompage à vide grossier (16) d'autre part peuvent être entraînés en rotation à des vitesses de rotation différentes, et le rapport entre la vitesse de rotation du rotor (20) du module de pompage à vide poussé (14) et la vitesse de rotation du rotor (22) du module de pompage à vide grossier (16) est variable et/ou réglable afin de modifier le rapport entre la puissance d'aspiration fournie par le module de pompage à vide poussé (14) et la puissance d'aspiration fournie par le module de pompage à vide grossier (16),
le module de pompage à vide poussé (14) et le module de pompage à vide grossier (16) présentent un arbre de rotor commun (24), le rotor (20) du module de pompage à vide poussé (14) ou le rotor (22) du module de pompage à vide grossier (16) étant couplé à l'arbre de rotor (24) de manière à pouvoir tourner par rapport à l'arbre de rotor (24),
**caractérisée en ce que**
le module de pompage à vide poussé (14) ou le module de pompage à vide grossier (16) est couplé à l'arbre de rotor commun (24) par l'intermédiaire d'un entraînement secondaire avec lequel le module de pompage à vide poussé (14) ou le module de pompage à vide grossier (16) peut être entraîné en rotation, la puissance d'entraînement amenée à l'entraînement secondaire étant variable et/ou réglable afin de modifier le rapport entre la puissance d'aspiration fournie par le module de pompage à vide poussé (14) et la puissance d'aspiration fournie par le module de pompage à vide grossier (16).

2. Pompe à vide selon la revendication 1,
**caractérisée en ce que**
la liaison d'action est modifiable de façon autonome et/ou réglable automatiquement de telle sorte qu'une augmentation de la puissance d'entraînement absorbée par le module de pompage à vide poussé (14) pendant le fonctionnement de la pompe à vide, provoquée par une augmentation de la pression du gaz présent à l'admission de pompe (12), est évitée ou au moins réduite.

3. Pompe à vide selon la revendication 1,
**caractérisée en ce que**
la vitesse de rotation, relative à l'arbre de rotor commun (24), du rotor (20, 22) couplé en rotation à l'arbre de rotor commun (24) est variable et/ou réglable afin de modifier le rapport entre la puissance d'aspiration fournie par le module de pompage à vide poussé (14) et la puissance d'aspiration fournie par le module de pompage à vide grossier (16).

4. Pompe à vide selon la revendication 1 ou 3,
**caractérisée en ce que**
l'entraînement secondaire est réalisé également pour agir comme un accouplement permettant un patinage variable ou réglable, de sorte que le rotor (20) du module de pompage à vide poussé (14) ou le rotor (22) du module de pompage à vide grossier (16) est couplé à l'arbre de rotor commun (24) par l'intermédiaire d'un accouplement qui est réalisé pour transmettre un couple de l'arbre de rotor commun (24) au rotor (20, 22) couplé en rotation à l'arbre de rotor commun (24),
en particulier, le rapport entre la vitesse d'entrée et la vitesse de sortie de l'accouplement est variable et/ou réglable afin de modifier le rapport entre la puissance d'aspiration fournie par le module de pompage à vide poussé (14) et la puissance d'aspiration fournie par le module de pompage à vide grossier (16).

5. Pompe à vide selon la revendication 4,
**caractérisée en ce que**
le rapport entre la vitesse d'entrée et la vitesse de sortie peut être variable de façon autonome ou être réglable automatiquement en fonction de la charge de couple de l'accouplement, de préférence de manière à limiter le couple transmissible par l'accouplement.

6. Pompe à vide selon l'une des revendications 1 et 3 à 5,
**caractérisée en ce que**
l'entraînement secondaire est un entraînement électrique, un entraînement électromagnétique, un entraînement à air comprimé ou un entraînement à gaz.

7. Pompe à vide selon l'une des revendications précédentes,
**caractérisée en ce que**
un stator du module de pompage à vide poussé (14) ou un stator du module de pompage à vide grossier (16) est apte à être entraîné en rotation par rapport au boîtier (18), la vitesse de rotation du stator rotatif par rapport au boîtier (18) étant de préférence variable et/ou réglable afin de modifier le rapport entre la puissance d'aspiration fournie par le module de pompage à vide poussé (14) et la puissance d'aspiration fournie par le module de pompage à vide grossier (16).

8. Pompe à vide selon l'une des revendications précédentes,
**caractérisée en ce que**
la liaison d'action est réglable automatiquement en fonction de la puissance d'entraînement absorbée par le module de pompage à vide poussé (14) et/ou en fonction de la puissance d'entraînement absorbée par le module de pompage à vide grossier (16),
et/ou **en ce que**
la liaison d'action est réglable automatiquement en fonction d'une pression du gaz à pomper, en particulier en fonction de la pression d'aspiration du gaz présente à l'admission de pompe (12), et/ou en fonction de la vitesse de rotation du module de pompage à vide poussé (14) et/ou de la vitesse de rotation du module de pompage à vide grossier (16).

9. Procédé de fonctionnement d'une pompe à vide réalisée de préférence selon l'une des revendications précédentes, comprenant une admission de pompe (12) ainsi qu'au moins un module de pompage à vide poussé (14) et au moins un module de pompage à vide grossier (16), qui sont disposés dans un boîtier commun (18) de la pompe à vide et qui sont en liaison d'action entre eux pour fournir un effet de pompage pour un gaz présent à l'admission de pompe (12), le procédé comprenant que la liaison d'action varie ou est réglée afin de modifier le rapport entre la puissance d'aspiration fournie par le module de pompage à vide poussé (14) et la puissance d'aspiration fournie par le module de pompage à vide grossier (16), dans lequel
un rotor (20) du module de pompage à vide poussé (14) d'une part et un rotor (22) du module de pompage à vide grossier (16) d'autre part peuvent être entraînés en rotation à des vitesses de rotation différentes, et le rapport entre la vitesse de rotation du rotor (20) du module de pompage à vide poussé (14) et la vitesse de rotation du rotor (22) du module de pompage à vide grossier (16) est varié et/ou réglé afin de modifier le rapport entre la puissance d'aspiration fournie par le module de pompage à vide poussé (14) et la puissance d'aspiration fournie par le module de pompage à vide grossier (16),
le module de pompage à vide poussé (14) et le module de pompage à vide grossier (16) présentent un arbre de rotor commun (24), le rotor (20) du module de pompage à vide poussé (14) ou le rotor (22) du module de pompage à vide grossier (16) étant couplé à l'arbre de rotor (24) de manière à pouvoir tourner par rapport à l'arbre de rotor (24),
**caractérisé en ce que**
le module de pompage à vide poussé (14) ou le module de pompage à vide grossier (16) est couplé à l'arbre de rotor commun (24) par l'intermédiaire d'un entraînement secondaire avec lequel le module de pompage à vide poussé (14) ou le module de pompage à vide grossier (16) est entraîné en rotation, la puissance d'entraînement amenée à l'entraînement secondaire étant variée et/ou réglée afin de modifier le rapport entre la puissance d'aspiration fournie par le module de pompage à vide poussé (14) et la puissance d'aspiration fournie par le module de pompage à vide grossier (16).
